(19) Europäisches Patentamt

European Patent Office

Office européen des brevets

(11) Numéro de publication: **0 250 277**
**B1**

(12) **FASCICULE DE BREVET EUROPEEN**

(45) Date de publication du fascicule du brevet: **01.08.90**

(21) Numéro de dépôt: **87401070.5**

(22) Date de dépôt: **12.05.87**

(51) Int. Cl.⁵: **B 60 N 2/48**

(54) **Appui-tête réglable pour siège de véhicule automobile ou analogue.**

(30) Priorité: **22.05.86 FR 8607287**

(43) Date de publication de la demande:
**23.12.87 Bulletin 87/52**

(45) Mention de la délivrance du brevet:
**01.08.90 Bulletin 90/31**

(84) Etats contractants désignés:
**AT BE CH DE ES GB IT LI LU NL SE**

(56) Documents cités:
**FR-A-1 471 309**
**FR-A-1 532 826**

(73) Titulaire: **ECIA - EQUIPEMENTS ET COMPOSANTS POUR L'INDUSTRIE AUTOMOBILE**
**F-25400 Audincourt (Doubs) (FR)**

(72) Inventeur: **Deley, Serge**
**1, Route d'Audincourt**
**F-25230 Seloncourt (FR)**
Inventeur: **Fourrey, François**
**34, rue du Petit Chênois**
**F-25200 Montbéliard (FR)**

(74) Mandataire: **Polus, Camille et al**
**c/o Cabinet Lavoix 2, Place d'Estienne d'Orves**
**F-75441 Paris Cedex 09 (FR)**

Courier Press, Leamington Spa, England.

## Description

Les appuis-tête sont de plus en plus demandés par les utilisateurs de véhicule automobile que ce soit pour le conducteur ou les passagers, mais ils ne sont réèllement appréciés que s'ils peuvent être réglés en fonction de la morphologie de l'utilisateur. Or, cette exigence oblige à les munir de dispositifs souvent complexes et par suite couteux.

La présente invention à pour but de remédier à cet inconvénient en fournissant un appui-tête réglable qui soit à la fois facilé à manipuler et peu couteux à réaliser.

Cette invention à en effet pour objet un appui-tête réglable comportant une armature rigide de support d'un coussin de rembourrage qui est reliée de chaque côté, par l'intermédiaire d'une biellette articulée, à un montant de fixation au dossier; l'appui-tête est caractérisé en ce qu'il comporte sur l'un des côtés de cette aramture, un secteur fixe, vertical, solidaire du montant latéral, traversé par un axe d'articulation de la biellette et muni de crans, et un secteur mobile vertical, solidaire de l'armature, ayant sa convexité tournée vers celle du secteur fixe, et egalement minu de crans, les crans des deux secteurs etant dirigés dans le meme sens; et un fil à ressort fixé à une extrémité sur l'axe d'articulation de la biellette sur le secteur fixe, traversant la fente d'un axe d'articulation de la biellette sur le secteur mobile, et relié à son autre extrémité à un organe de commande de son coulissement dans cette fente, entre une position de blocage dans les crans en regard des deux secteurs et une position dégagée de ces crans, de libération de l'élément mobile.

Un tel appui-tête peut prendre des positions extrèmement diverses en se déplaçant avec la biellette autour de l'axe d'articulation de cette dernière sur le secteur fixe ou seul par pivotement du secteur mobile sur son axe d'articulation. Par contre, une simple action sur le bouton de commande assure le verrouillage dans la position choisie.

La description ci-dessous d'un mode de réalisation, donné à titre d'exemple non limitatif et représenté aux dessins annexés, fera d'ailleurs ressortir les avantages ou caractéristiques de l'invention.

Sur ces dessins:

— la Fig. 1 est une vue de face de l'appui-tête dont le rembourage a été retiré;

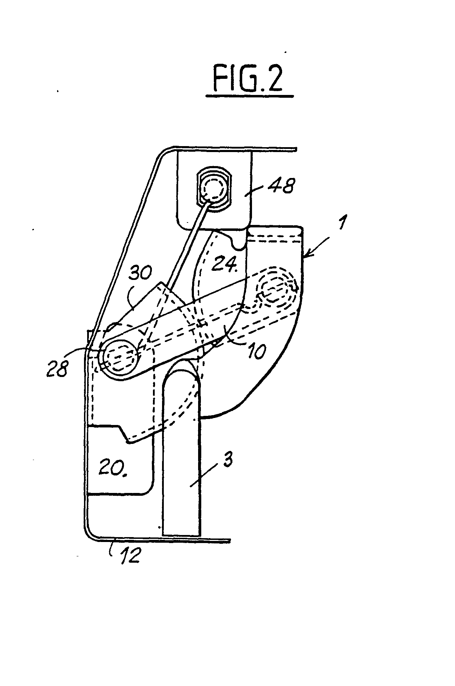

— la Fig. 2 est une vue en élévation prise du côte droit de la Fig. 1;

— les Fig. 3 et 4 sont des vues schématiques du dispositif de commande, respectivement en position déverrouillée et en position verrouillée;

— les Figs. 5, 6 et 7 montrent schématiquement la position de l'appui-tête et des secteurs fixe et mobile dans trois positions différentes respectivement basse, haute et avancée.

L'appui-tête représenté comporte un support 1 destiné à sa fixation sur le siège auquel il doit être adapté. Le support 1 comporte en conséquence deux montants latéraux verticaux, respectivement 2 et 3, qui sont reliés entre eux par une barre horizontale 4.

Le support 1 est relié par l'intermédiaire de deux biellettes articulées respectivement 8 et 10 à une armature 12 destinée à porter un coussin de rembourrage. La biellette 8 est articulée à l'une de ses extrémités par un axe 16 sur le support 1 et à son autre extrémité par un axe 18 sur une patte latérale 20 de l'armature 12.

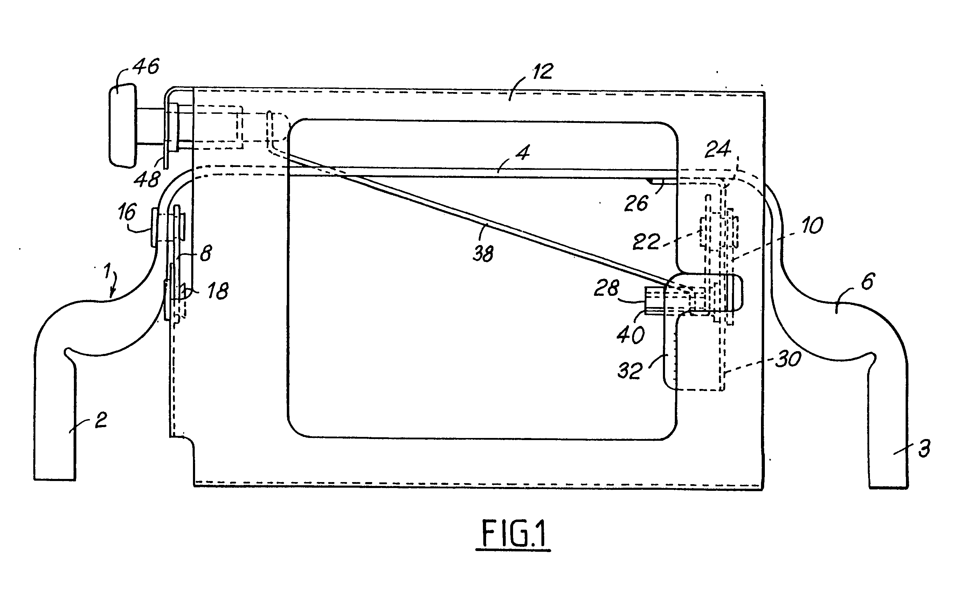

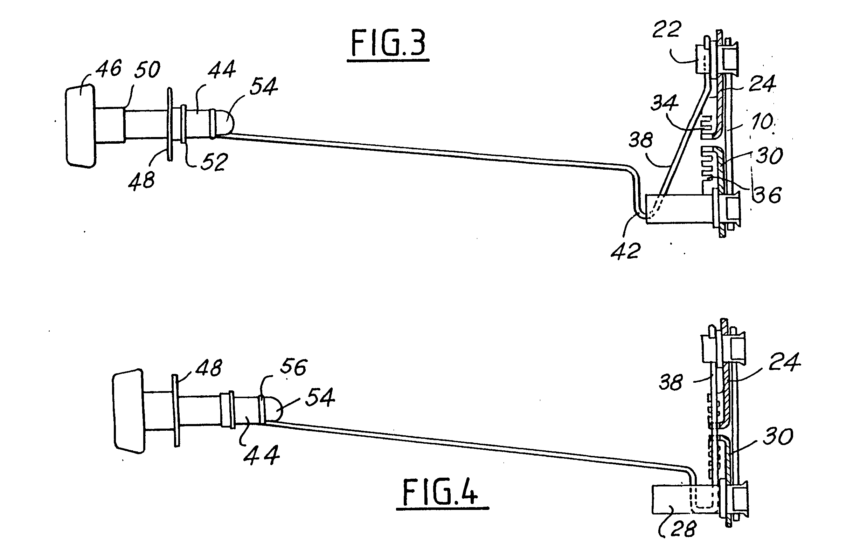

La biellette 10 qui est située de l'autre côté de l'armature, c'est à dire du côté droit en regardant la Fig. 1, est articulée à l'une de ses extrémité sur un axe fixe 22 traversant sensiblement en son centre un secteur 24 qui est muni d'une patte 26 perpendiculaire à sa grande face et est fixé au moyen de cette patte sous la barre 4 du support 1. A son autre extrémité la biellette 10 est également articulée sur un axe fixe 28 qui traverse sensiblement en son centre un secteur 30, muni d'une patte 32 de fixation sur l'armature 12. Chacun des secteurs 24 et 30 comporte une série de crans respectivement 34 et 36 qui sont délimités par des dents perpendiculaires au secteur correspondant, les deux secteurs étant dans un même plan vertical et leurs dents étant dirigées dans le même sens, comme le montre plus clairement les figures 3 et 4. Par ailleurs, les rayons des secteurs fixe 24 et mobile 30 ainsi que la longueur de la biellette 10 sont choisis de telle manière qu'au droit de cette biellette un léger espace est ménagé entre les deux secteurs quelle que soit la position relative de ces derniers.

L'axe 22 porte en outre sur son extrémité opposée à la biellette 10, l'extrémité d'un fil à ressort 38 qui descend en direction de l'axe 28 du secteur mobile 30. Cet axe comporte en effet, une fente diamétrale 40 dans laquelle pénètre le fil 38 qui forme une boucle 42 a cet endroit, puis est recourbé latéralement pour traverser toute la longueur de l'armature 12 et être enroulé sur un axe de commande 44 solidaire d'un bouton de commande 46. L'axe de commande 44 traverse un languette 48 solidaire de l'armature 12 et comporte deux épaulements espacés respectivement 50 et 52 situés de part et d'autre de la languette 48 et jouant le rôle de butée de limitation de course pour l'organe de commande. De préférence, une rotule 54 est montée à l'extrémité de l'arbre de commande 44 de façon a permettre le pivotement de l'extrémité 56 du fil à ressort 38 par rapport à cet arbre.

Sous l'effet du déplacement axial du bouton de commande 46 ainsi que de l'axe 44 le fil à ressort 38 est déplacé dans la fente 40 de l'axe 28, entre les deux positions représentées sur les Figures 3 et 4. Sur la Fig. 3, en effet, la boucle 42 du fil 38 est à l'extrémité extérieure de l'axe 28, de sorte que le fil 38 passe entièrement à l'extérieur des crans 34 et 36 des deux secteurs. Au contraire, lorsque le bouton de commande 46 a été repoussé vers l'intérieur de l'armature 12, comme représenté sur la Fig. 4, la boucle 42 a coulissé jusqu'au fond de l'axe 28 et le ressort 38 à pénêtré dans deux crans en regard des secteurs 24 et 30, de sorte qu'il bloque ces deux secteurs l'un par rapport à l'autre et par suite interdit tout déplacement du secteur mobile 30. L'appui-tête est alors dans sa position d'utilisation.

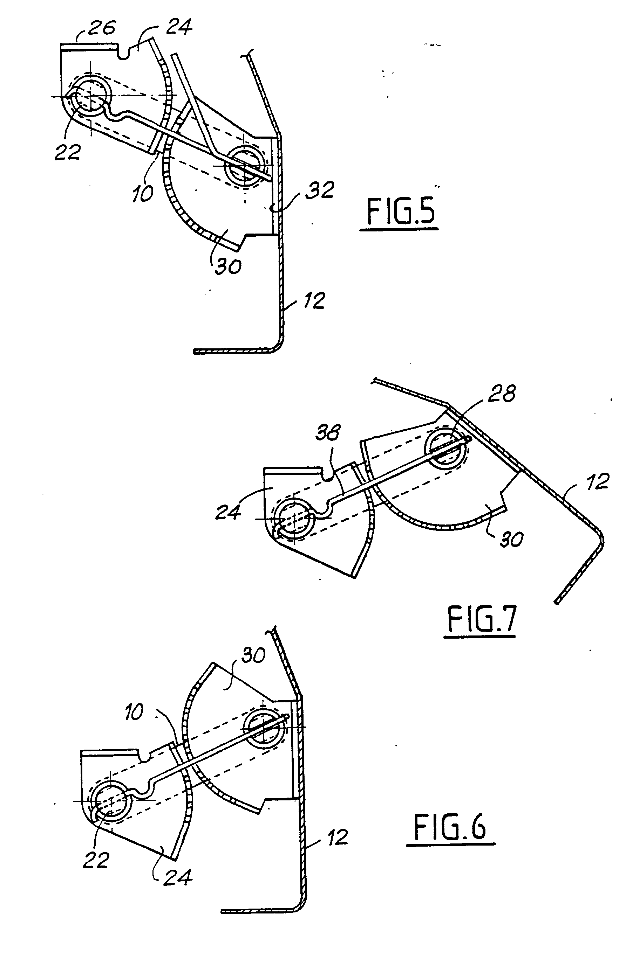

Si l'utilisateur veut changer la position de l'appui-tête il doit donc tirer le bouton de commande 46 et dégager le fil 38 des crans 34 et 36. Il peut alors déplacer l'armature 12 par exemple, en la poussant vers le haut ce qui fait pivoter la biellette 10 autour de son axe d'articulation 22 sur le secteur 24 tandis que le secteur 30 se déplace pratiquement parallèlement à lui même comme le montre les Figures 5 et 8.

Il peut également avancer l'armature 12 en la faisant pivoter autour de l'axe 28 ce qui fait tourner le secteur mobile 30 sans déplacer la biellette 10 et fait passer l'ensemble de l'appui-tête de la position représentée sur la Fig. 6 à la position représentée sur la Fig. 7.

Des que la position désirée à été trouvée le bouton 46 est repoussé pour bloquer à nouveau les deux secteurs l'un par rapport à l'autre et ainsi immobiliser l'appui-tête.

Bien entendu le fil 38 étant un fil à ressort l'appui-tête a tendance, dès que le secteur mobile est libéré à reprendre sa position de repos ce qui supprime la tension du ressort 38 et conserve sa souplesse au fonctionnement de l'ensemble.

On dispose ainsi d'un appui-tête qui est extrèmement facile à déplacer et peut prendre de très nombreuses positions de sorte qu'il est particulièrement facile à adapter à la morphologie de l'utilisateur.

## Revendications

1. Appui-tête réglable comportant une armature rigide (12) de support d'un coussin de rembourage qui est reliée de chaque côté par l'intermédiaire d'une biellette articulée (8, 10) à un montant (2, 3) de fixation au dossier, caractérisé en ce qu'il comporte, sur un côté de l'armature, un secteur fixe (24) qui est solidaire du montant latéral correspondant, traversé par un axe (22) d'articulation de la biellette (10) et muni de crans (34), et un secteur mobile vertical (30) qui est solidaire de l'armature, a sa couvexité tournée vers celle du secteur fixe et est également muni de crans (36), les crans des deux secteurs étant dirigés dans le même sens, et un fil à ressort (38) fixé à une extrémité sur l'axe (22) d'articulation de la biellette sur le secteur fixe (24), et relié à sa seconde extrémité à un organe (46) de commande de son déplacement entre une position de blocage dans les crans en regard (34, 36) des deux secteurs et une position éloignée de ces crans, de libération du secteur mobile.

2. Appui-tête suivant la revendication 1, caractérisé en ce que les crans (34, 36) des secteurs (24 et 30) sont dirigés perpendiculairement a la grande face de ces derniers.

3. Appui-tête suivant l'une des revendications 1 et 2, caractérisé en ce que le fil à ressort coulisse dans une fente diamétrale (40) de l'axe (28) d'articulation de la biellette (10) sur le secteur mobile (30).

4. Appui-tête suivant la revendication 3, caractérisé en ce que le fil à ressort (38) forme une boucle (42) qui coulisse dans la fente (40) de l'axe (28) du secteur mobile (30).

5. Appui-tête suivant la revendication 4, caractérisé en ce que le fil à ressort (38) traverse la longueur de l'armature (12) et est relié à un bouton de commande (46) mobile axialement, monté du côté de l'armature opposé au dispositif de blocage.

6. Appui-tête suivant l'une des revendications précédentes, caractérisé en ce que les secteurs fixe et mobile (24 et 30) ont leur grande face dans un même plan vertical.

7. Appui-tête suivant l'une des revendications précédentes, caractérisé en ce que chaque secteur comporte une patte recourbée de fixation (26, 32).

8. Appui-tête suivant l'une des revendications précédentes, caractérisé en ce que les montants latéraux (2, 3) de fixation au dossier sont formés par un tube unique qui est recourbé et déformé pour constituer également une barre de support (4).

## Patentansprüche

1. Verstellbare Kopfstütze mit einem starren Beschlag (12) zur Halterung eines Polsterkissens, welcher auf jeder Seite über einen gelenkigen Schwenkarm (8, 10) mit einer Befestigungsstrebe (2, 3) für die Rückenlehne verbunden ist, dadurch gekennzeichnet, daß sie auf einer Seite des Beschlags einen festen Sektor (24) enthält, welcher fest mit der entsprechenden seitlichen Strebe verbunden, von einer Gelenkachse (22) der Schwenkarme (10) durchsetzt und mit Rasten (34) versehen ist, einen beweglichen, senkrechten Sektor (30), welcher mit dem Beschlag fest verbunden ist, seine Ausbauchung dem feststehenden Sektor zuwendet und ebenfalls mit Rasten (36) versehen ist, wobei die Rasten der beiden Teile dieselbe Richtung aufweisen, und eine Drahtfeder (38), die mit einem Ende auf der Gelenkachse (22) des Schwenkarmes auf dem festen Sektor (24) befestigt ist und am zweiten Ende mit einer Vorrichtung (46) zur Steuerung für ihre Verschiebung zwischen einer Verriegelungsposition in den Rasten (34, 36) der beiden Sektoren und einer von den Rasten entfernten Stellung zur Freigabe des beweglichen Sektors versehen ist.

2. Kopfstütze nach Anspruch 1, dadurch gekennzeichnet, daß die Rasten (34, 36) der Sektoren (24 und 30) senkrecht zur großen Fläche der letzteren verlaufen.

3. Kopfstütze nach Anspruch 1 und 2, dadurch gekennzeichnet, daß die Drahtfeder in einem diametralen Schlitz (40) der Schwenkachse (28) des Schwenkarms (10) auf dem beweglichen Sektor (30) gleitet.

4. Kopfstütze nach Anspruch 3, dadurch gekennzeichnet, daß die Drahtfeder (38) eine Schleife (42) bildet, welche in dem Schlitz (40) der Achse (28) des beweglichen Sektors (30) gleitet.

5. Kopfstütze nach Anspruch 4, dadurch gekennzeichnet, daß die Drahtfeder (38) sich über die Länge des Beschlags (12) erstreckt und mit einem axial beweglichen Steuerkopf (46) verbunden ist, der auf der der Verriegelungsvorrichtung entgegengesetzten Seite des Beschlages angebracht ist.

6. Kopfstütze nach einem der vorhergehenden Ansprüche, dadurch gekennzeichnet, daß sich die große Fläche des festen und des beweglichen Sektors (24 und 30) in derselben senkrechten Ebene befindet.

7. Kopfstütze nach einem der vorhergehenden Ansprüche, dadurch gekennzeichnet, daß jeder Sektor eine umgebogene Befestigungslasche (26, 32) aufweist.

8. Kopfstütze nach einem der vorhergehenden Ansprüche, dadurch gekennzeichnet, daß die seitlichen Streben (2, 3) zur Befestigung an der Lehne aus einem einzigen Rohr geformt sind, das umgebogen und verformt ist, um außerdem eine Trägerstange (4) zu bilden.

**Claims**

1. Adjustable headrest comprising a rigid frame (12) supporting a padded cushion which is connected on each side through a hinged connecting rod (8, 10) to a stanchion (2, 3) for fixing to the seat back, characterised in that it comprises, on one side of the frame, a fixed quadrant (24) which is securely attached to the corresponding side stanchion, traversed by a pin (22) on which the connecting rod (10) is hinged and provided with notches (34), and a vertical moving quadrant (30) which is securely attached to the frame, at its convex part turned towards the convex part of the fixed quadrant, and is also provided with notches (36), the notches on the two quadrants being oriented in the same direction, and a spring wire (38) fixed at one end to the pin (22) by which the connecting rod hinges on the fixed quadrant (24), and connected at its other end to a device (46) for controlling its movement between a position in which it is locked in the facing notches (34, 36) in the two quadrants and a position away from these notches, in which the moving quadrant is free.

2. Headrest as claimed in claim 1, characterised in that the notches (34, 36) in the quadrants (24 and 30) are oriented at right angles to the large faces of the latter.

3. Headrest as claimed in one of claims 1 and 2, characterised in that the spring wire slides in a diametral slot (40) in the pin (28) by which the connecting rod (10) hinges on the moving quadrant (30).

4. Headrest as claimed in claim 3, characterised in that the spring wire (38) forms a loop (42) which slides in the slot (40) in the pin (28) on the moving quadrant (30).

5. Headrest as claimed in claim 4, characterised in that the spring wire (38) traverses the length of the frame (12) and is connected to a control knob (46) moving axially, mounted on the side of the frame opposite to the locking device.

6. Headrest as claimed in one of the preceding claims, characterised in that the fixed and moving quadrants (24 and 30) have their large faces in the same vertical plane.

7. Headrest as claimed in one of the preceding claims, characterised in that each quadrant comprises a curved fastening lug (26, 32).

8. Headrest as claimed in one of the preceding claims, characterised in that the side stanchions (2, 3) for fixing to the seat back are formed by a single tube which is curved and bent in order also to constitute a support bar (4).

FIG.1

# FIG.2

FIG.3

46 50 44 54

48 52

22

34 24

38 10

30

36

42

FIG.4

48 56 54

44

38 24

30

28

EP 0 250 277 B1

3

FIG.5

FIG.7

FIG.6